# EUROPEAN PATENT APPLICATION

(11) **EP 4 622 185 A1**
(43) Date of publication of application: **24.09.2025**
(21) Application number: 24164892.2
(22) Date of filing: 20.03.2024
(51) Int. Cl.: H04L 12/40

(54) **CAN DEVICE, CAN SYSTEM AND METHOD FOR THE CAN DEVICE**

(71) Applicant: NXP B.V., 5656 AG Eindhoven (NL)
(72) Inventor: Elend, Bernd Uwe Gerhard, 5656 AG Eindhoven (NL); Chan, Lu Lu, 5656 AG Eindhoven (NL); Muth, Matthias Berthold, 5656 AG Eindhoven (NL)
(74) Representative: Schmütz, Christian Klaus Johannes

(57) **Abstract**

The present invention relates to a Controller Area Network, CAN, device (126, 127, 128), wherein the CAN device is configured to transmit and receive CAN frames (130, 134, 136, 138, 150, 152, 154, 202, 204), wherein the CAN device comprises a first queue (140) configured to including at least one first CAN frame (134, 136, 138), wherein a first queue credit (132) is associated with the first queue, wherein the CAN device is configured to, if the first queue credit is greater than a predefined first reference value, start to transmit at least one first CAN frame of the first queue, and wherein the CAN device is configured to, if the first queue credit is less than the predefined first reference value, prevent transmission of the at least one first CAN frame of the first queues. The present invention also relates to a CAN system (100) comprising a plurality of CAN devices and the CAN bus. Further, the present invention relates to a method (206) for the CAN device.

## Description

### TECHNICAL FIELD

The present disclosure relates to a controller area network, CAN, device, a CAN system, and a method for the CAN device.

### BACKGROUND

A Controller Area Network (CAN) can be used for communications within vehicles, in particular within automobiles. It will be appreciated that CAN also has application outside of the field of automobiles. A CAN system may include multiple CAN nodes, wherein each CAN node may be a device like an electronic control units (ECUs), an engine control module (ECM), a power train control module (PCM), airbags, antilock brakes, cruise control, electric power steering, audio systems, windows, doors, mirror adjustment, battery and recharging systems for hybrid/electric cars, and many more. Several CAN nodes may be connected to a joint CAN bus, such that the CAN nodes can communicate among each other over the CAN bus using a CAN protocol. The CAN protocol is used to enable communications between the various CAN nodes. The data link layer of the CAN protocol is standardized as International Standards Organization (ISO) 11898-1:2003. CAN Flexible Data-Rate or "CAN FD" is an extension of the standardized CAN data link layer protocol and is integrated into the ISO 11898-1:2015 standard. CAN FD may provide higher data rates. The standardized CAN data link layer protocol is being further extended to provide even higher data rates. A further extension, referred to as CAN XL, with an optional level scheme on the physical layer allowing even higher data rates, is in the definition phase discussed under CiA610 (CAN in Automation) and is moving towards standardization in the form of ISO 11898-1:202x.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a Controller Area Network, CAN, device is provided, wherein the CAN device is configured to transmit and receive CAN frames, wherein the CAN device comprises a first queue configured to including at least one first CAN frame (134, 136, 138), wherein a first queue credit (132) is associated with the first queue, wherein the CAN device is configured to, if the first queue credit is greater than a predefined first reference value, start to transmit at least one first CAN frame of the first queue, and wherein the CAN device is configured to, if the first queue credit is less than the predefined first reference value, prevent transmission of the at least one first CAN frame of the first queues.

In one or more embodiments, predefined bits of each CAN frame are referred to as rank bits of the respective CAN frame, wherein the rank bits of each first CAN frame are in a predefined first rank range.

In one or more embodiments, the CAN device comprises a second queue (148) configured to include at least one second CAN frame, wherein a second queue credit is associated with the second queue, wherein the CAN device is configured to, if the second queue credit is greater than a predefined second reference value, start to transmit at least a second CAN frame of the second queue, and wherein the CAN device is configured to, if the second queue credit is less than the predefined second reference value, prevent transmission of the at least one second CAN frame of the second queue.

In one or more embodiments, the rank bits of each second CAN frame are in a predefined second rank range.

In one or more embodiments, rank bits of each CAN frame are defined by two to six bits of the most significant bits of the respective CAN frame.

In one or more embodiments, the CAN device is configured to, in response to a sending successfully of a CAN frame from a queue, reduce the associated queue credit.

In one or more embodiments, the CAN device is configured to, in response to a sending successfully of a CAN frame from one queue, increase the queue credit of the other queue.

In one or more embodiments, the CAN device is configured to detect an idle time while neither a CAN frame is transmitted by the CAN device nor a CAN frame is received by the CAN device, and wherein the CAN device is configured to increase each queue credit depending on the idle time.

In one or more embodiments, the device is configured to, in response if the idle time is greater than a predefined threshold time, set and/or limit each queue credit to a predefined idle limit.

In one or more embodiments, the CAN device is configured to receive a CAN frame referred to as the third CAN frame, and wherein the CAN device is configured, in response, if the rank bits of the third CAN frame are in the first rank range, to reduce the first queue credit.

In one or more embodiments, the CAN device is configured to receive a CAN frame referred to as a fourth CAN frame, and wherein the device is configured, in response, if the rank bits of the fourth CAN frame are in the second rank range, to reduce the second queue credit.

In one or more embodiments, the CAN device is configured to receive a plurality of third CAN frames, wherein the CAN device is configured, in response, if the first received third CAN frame comprises rank bits that are in the first rank range, to set the first queue credit to a predefined first calibration value, and wherein the device is configured to, if a further third CAN frame comprising rank bits that are in the first rank range is received, reduce the first queue credit.

In one or more embodiments, the CAN device is configured to receive a fourth CAN frame followed by a third CAN frame, wherein the rank bits of the third CAN frame are in the first rank range, wherein the rank bits of the fourth CAN frame are in the second rank range, wherein the identifier of the third CAN frame represents a higher priority than the identifier of the fourth CAN frame, and wherein the device is configured to, if the first queue credit is less than a first threshold value, set the first queue credit to a predefined third reference value.

In accordance with a second aspect of the present disclosure, a controller area network, CAN, system is provided, wherein the CAN system comprising: a plurality of CAN devices, each according to the first aspect of the present disclosure and/or each according to any of the preceding embodiments; wherein the CAN system further comprising a CAN bus, wherein the CAN devices are coupled via the CAN bus.

In accordance with a third aspect of the present disclosure, a method for a Controller Area Network, CAN, device is provided, wherein the CAN device being configured to according to the first aspect of the present disclosure and/or each according to any of the preceding embodiments, and wherein the CAN device being configured to transmit and receive CAN frames, and wherein the CAN device comprises a first queue configured to include at least a first CAN frame, wherein the first queue is associated with a first queue credit, and wherein the method comprises the following steps: (a) beginning to transmit at least a first CAN frame of the first queue in response if the first queue credit is or becomes greater than a predefined first reference value, and (b) preventing the at least one first CAN frame of the first queues from being sent in response if the first queue credit is or becomes less than the predefined first reference value.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements.
Figure 1 shows a simplified block diagram of an embodiment of the CAN system.
Figure 2 shows a simplified diagram of a CAN frame.
Figure 3 shows a simplified diagram of an embodiment of the first and second queue of the CAN device.
Figure 4 shows a simplified diagram of a part of the CAN frame.
Figure 5 shows simplified waveforms of queue credits.
Figure 6 shows simplified block diagram of another embodiment of the CAN system.
Figure 7 shows simplified diagram of an embodiment of the first and second queue of a first CAN device.
Figure 8 shows simplified diagram of an embodiment of the first and second queue of a second CAN device.
Figure 9 shows another example of simplified waveforms of queue credits.
Figure 10 shows a simplified flowchart of the method.

### DESCRIPTION OF EMBODIMENTS

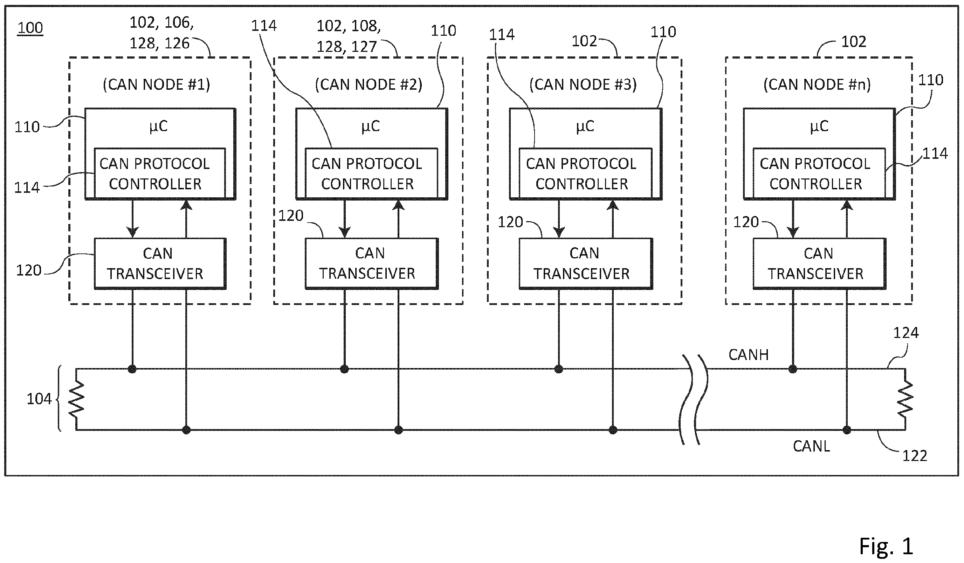

Figure 1 schematically illustrates an example of a CAN system 100. The CAN system may comprise several CAN nodes 102 and a CAN bus 104. Each of the CAN nodes 102 can be connected to the CAN bus 104. As a result, the CAN nodes 102 are able to communicate among each other via the CAN bus 104. In an example, a CAN node 102 may be at least a part of an electronic control units (ECUs), as an engine control module (ECM), a power train control module (PCM), an airbag module, an antilock brakes module, a cruise control module, an electric power steering module, an audio module, a window module, a door module, a mirror adjustment module, a battery module, in particular a battery management module, a recharging module for hybrid/electric cars, and/or other.

A CAN protocol may enable a communication via the CAN bus 104. For example, the CAN protocol may enable communications between at least two CAN nodes 102. In an example, each CAN node 102 includes a CAN transceiver 120 and a microcontroller 110 having an embedded CAN controller 114. The CAN controller 114 may be referred to as a controller or a CAN protocol controller. The CAN transceiver 120 may be referred to as a transceiver.

The microcontroller 110 may be connected to at least one further device (not shown) such as a sensor, an actuator, or some other control device. The microcontroller 110 may be programmed to determine the meaning of a received message and/or to generate an appropriate outgoing message. The microcontroller 110, which may also be referred to as host processor, host or digital signal processor (DSPs). In an example, the microcontroller 110 may support application software that interacts with the CAN controller 114.

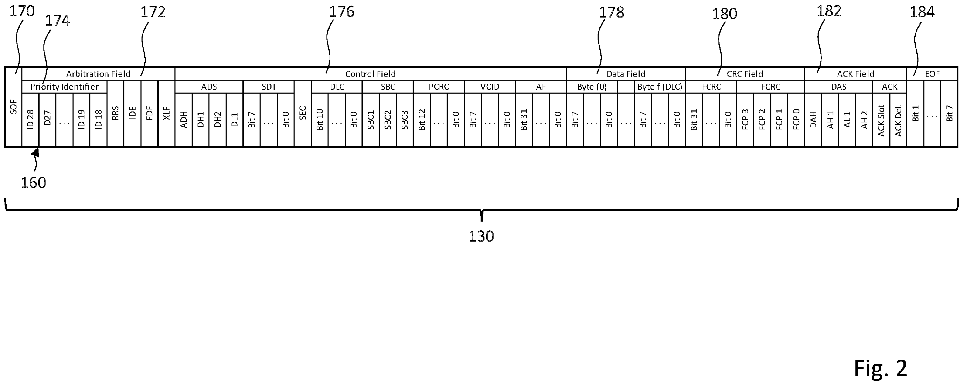

The CAN bus 104 is preferably configured to carry an analog differential signal, in particular a differential voltage signal representing a CAN frame 130. An example of a CAN frame 130 is shown schematically in Figure 2. The CAN bus 104 may comprise a first signal line 124, which is referred to as a first CAN signal line 124 and/or a CAN high (CANH) bus line 124. The CAN bus 104 may also comprise a second signal line 122, which is referred to as a second CAN signal line 122 and/or as the CAN low (CANL) bus line 122.

If at least two CAN nodes 102 try to access the CAN bus 104 simultaneously in order to each send a CAN frame 130 via the CAN bus 104, the so-called arbitration prevents collisions from occurring or resolves a potential collision. As a result, only one of the at least two CAN frames 130 continues after the non-destructive arbitration. The arbitration is performed based on the bits 172 of the arbitration field of the CAN frames 130. Further, the arbitration is performed bit by bit. The CAN frame 130 of the two CAN frames 130 whose arbitration field 172 represents the "smaller" number wins. For example: Data frames may win over remote frames, Standard IDs may win over extended ID with the same base ID, Classical may wins over FD and FD wins over XL.

It is known from the prior art that the losing CAN node 102 in the arbitration initially changes to a receive state after losing the arbitration until the transmission of the CAN frame 130 by the winning CAN node 102 is completed. The previously losing CAN node 102 will attempt to transmit CAN frame 130 again, after the winning CAN node 102 finished the transmission of its CAN frame 130. If the losing CAN node 102 also fails in the second attempt, the CAN node 102 will repeat the attempt until the CAN node 102 is successful (or aborted upon request of a SW higher layer).

The preceding explanation follows the basic idea that the importance of a CAN message in node 102 determines which CAN node 102 of multiple CAN nodes 102 of a CAN system 100 is successful in accessing a shared CAN bus 104 if there is a simultaneous access request from multiple CAN nodes 102. As a result, the priority identifier 174 of a CAN frame 130 is usually characterized by the importance of a message pending for transmission in a CAN node 102.

The first two CAN nodes 102 of the CAN system 100 arranged on the left side in Figure 1 are referred to as the first CAN node 106 and the second CAN node 108. In the prior art, the priority identifier 174 of a CAN frame 130 pending in the first CAN node 106 may be smaller than the priority identifier 174 of another CAN frame 130 pending in the second CAN node 108. Thus, the priority of the message pending in CAN node 106 is higher than the priority of the message pending in CAN node 108.

If each of both, the first CAN node 106 and the second CAN node 108 try to transmit multiple CAN frames 130, then the situation may arise where the first CAN node 106 may first transmit all of its (high priority) CAN frames 130 before the second CAN node 108 may begin transmission of one of its CAN frames 130. Whenever the second CAN node 108 in this example attempts to start sending a CAN frame 130 at the same time as the first CAN node 106, the second CAN node 108 may lose the arbitration. Against this background, the situation may arise where a single (first) CAN node 106 may sequentially send a plurality of CAN frames 130 over the CAN bus 104, while the other (second) CAN node 108 of the same CAN system 100 has to wait until the first CAN node 106 has completed sending the aforementioned plurality of CAN frames 130.

Against this background, there is a potential objective to provide a possibility that allows, for example, the waiting time of a CAN node 102-108 until the CAN node 102-108 obtains access to a CAN bus 104 to transmit a CAN frame 130 and/or, for example, the importance of a CAN frame 130 (or the importance of its payload) to contribute to the importance with which the CAN node 102-108 can obtain access to the CAN bus 104.

A potential solution for the possibility mentioned above is based on the idea of providing a CAN device 128 that has implemented a queue 140. The CAN device 128 may form part of the CAN node 102. In an example, the CAN device 128 may be integrated into the CAN node 102, the microcontroller 110 of the CAN node 102, and/or the CAN controller 114. The CAN controller 114 can also be designed as an individual component. In a further example, each CAN node 102 may be formed by a CAN device 128.

The queue 140 implemented by the CAN device 128 may have an associated credit, also referred to as a queue credit 132. In an example, the queue credit 132 may be understood as a numerical value. According to the queue credit 132, the CAN device 128 can decide whether either the CAN device 128 is allowed to change to a state referred to as an active state, in which the CAN device 128 can try to obtain access to the CAN bus 104 in particular via arbitration, or whether the CAN device 128 changes or remains in another state, in particular a waiting state, in which the CAN device 128 is not allowed to start arbitration, and no transmission and/or no attempt to transmit a CAN frame 130 is performed.

In an example, the first and second CAN nodes 106, 108 of the CAN system 100 arranged on the left in Fig. 1 may each form an embodiment of the CAN device 128, wherein the two CAN devices 128 are referred to as the first CAN device 126 and the second CAN device 127. Possible advantageous explanations, preferred features, technical effects and/or advantages explained in connection with a CAN device 126-128 in the following may apply to each CAN device 126, 127 in an analogous manner.

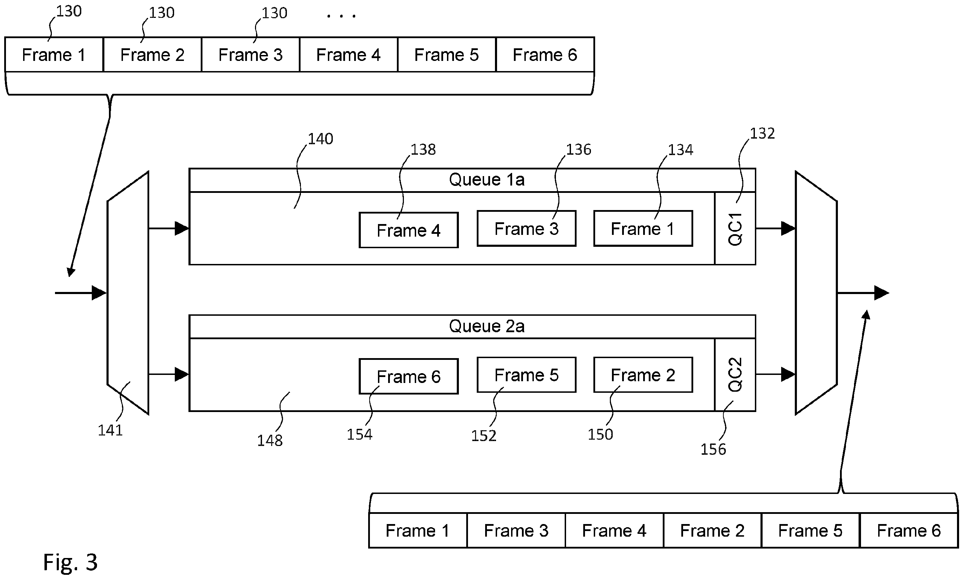

A CAN device 128 is proposed that is configured to be capable of transmitting and receiving CAN frames 130. The proposed CAN device 128 is further configured to comprise and/or use a queue 140, referred to as first queue 140. The first queue 140 is configured to comprise at least one CAN frame 130, wherein a CAN frame 130 of the first queue 140 may be referred to as a first CAN frame 134, 136, 138. The CAN device 128 may be configured to form the first queue 140. To form a first queue 140, the CAN device 128 may be configured to create a new queue, implement a queue and/or activate a template queue as first queue 140. Figure 3 schematically illustrates an example of the first queue 140. The first queue 140 may comprise a plurality of first CAN frames 134, 136, 138. In an example, the CAN device 128 may be configured if a plurality of first CAN frames 134, 136, 138 are comprised by the first queue 140 such that the first CAN frames 134, 138, 138 are ordered in a sequence.

In an example, a queue, such as the first queue 140, may be understood as a sequence in which a plurality of CAN frames is arranged one after another. The order of the CAN frames in the queue may be defined by the order in which the CAN frames have been added to the queue. The so-called first in - first out (FIFO) principle can apply to the queue. As an effect, the CAN frames may leave the queue solely in the order in which they were added to the queue.

The CAN device 128 is configured, in response, if the first queue credit 132 of the first queue 140 is greater than a predefined first reference value, to start sending at least a first CAN frame 134, 136, 138 of the first queue 140. The CAN device 128 is further configured, in response, if the first queue credit 132 of the first queue 140 is less than the predefined reference value, to prevent transmission of the at least one first CAN frame 134, 136, 138 of the first queue 140. The CAN device 128 may be configured to adjust the first reference value. For example, a hysteresis can be created by the adjustment.

The CAN device 128 may, in an example, begin arbitration to transmit the first CAN frame 134 if the first queue credit 132 of the first queue 140 is greater than the first reference value. The CAN device 128 may be configured accordingly. If the CAN device 128 wins the arbitration, the CAN device 128 may transmit the complete first CAN frame 134. If the CAN device 128 loses the arbitration, the CAN device 128 will stop transmitting the first CAN frame 134.

As discussed in the previous example, the CAN device 128 may be configured, in response if the first queue credit 132 is or becomes greater than the predefined first reference value, to begin sending exactly one first CAN frame 134. According to the arbitration, the CAN device 128 may completely transmit the respective first CAN frame 134 or stop the transmission attempt, if arbitration is lost. In each of the two cases, the CAN device 128 may subsequently check whether the first queue credit 132 is greater than the first reference value. Furthermore, the CAN device 128 may be configured to decide, according to the result of the check, i.e. whether the first queue credit 132 is greater or less than the predefined first reference value, whether the CAN device 128 starts transmitting a (further) first CAN frame 134, 136, or whether the CAN device 128 prevents the transmission of a (further) first CAN frame 134, 136. The CAN device 128 may be configured to decide either to start the transmission of the first CAN frame 134, 136 or prevent the transmission of the first CAN frame 134, 136 (only) at or after each time, when a CAN frame transmission is finished or when a CAN frame reception is finished. In other word, the CAN device 128 may be configured to decide either to start the transmission of the first CAN frame 134, 136 or prevent the transmission of the first CAN frame 134, 136 (only) at or after each time, when the CAN bus becomes idle. An idle bus may occur after a full transmission of a CAN frame or after an bus error occurred. For example, if arbitration has been won for a first CAN frame 134, 136, then the corresponding first CAN frame 134, 136 is transmitted completely before the CAN device 128 makes the decision for the next first CAN frame 134, 136 as to whether the corresponding first CAN frame 134, 136 can be transmitted.

The first queue 140 and the associated first queue credit 132 provide the possibility and an associated advantage that, for example, the wait time (see above) and/or the importance of a CAN frame 130, in particular of the associated payload data, can contribute to the importance with which the CAN device 128 obtains access to the CAN bus 104 for sending first CAN frames 134, 136, 138.

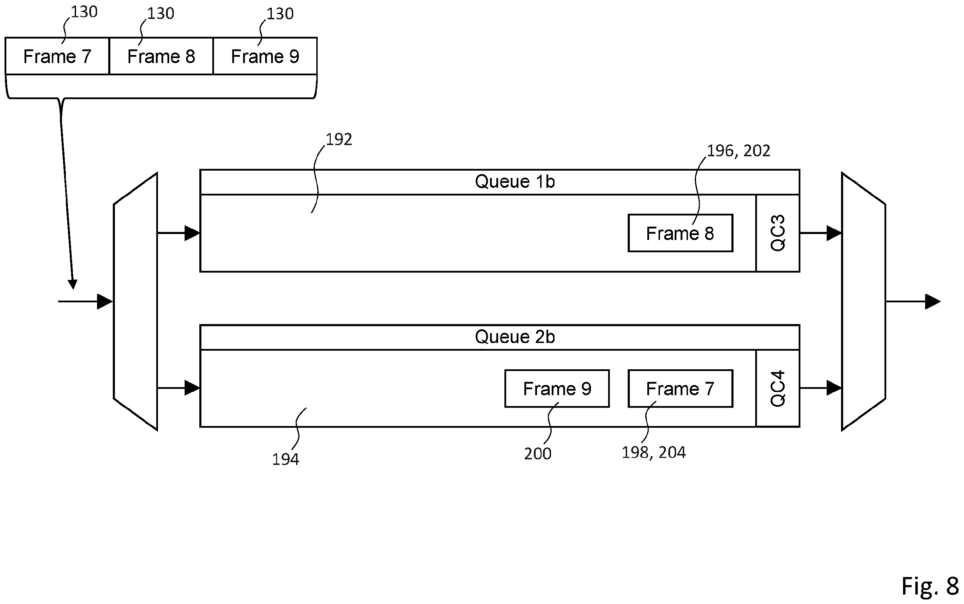

For example, if a first CAN device 126 has successively transmitted a plurality of CAN frames 134, 136 over the CAN bus 104, this uninterrupted bus access may result in a reduction of the first queue credit 132 of the first queue 140 of the first CAN device 126. At the same time, a second CAN device 127 waiting to access the CAN bus 104 may adapt its first queue credit of the first queue 192 of the second CAN device 127 to increase. Fig. 8 schematically illustrates an example of the first queue 192 of the second CAN device 127. In an example, the situation may occur in which the first queue credit 132 of the first queue 140 of the first CAN device 126 is less than the first reference value, while at the same time the first queue credit of the first queue 192 of the second CAN device 127 is greater than the first reference value. As a consequence, a change in the authorization to access the CAN bus 104 may occur, so that in an example the second CAN device 127 instead of the first CAN device 126 may start sending a first CAN frame 196 of the first queue 192 of the second CAN device 127, in particular by performing arbitration.

Based on the previous example, it has been explained that via the first queue 140, 192 and the respective associated queue credit 132, 156, it is possible to take into account a waiting time for determining the importance to access to the CAN bus 104. As an effect, a fair access to the bus among the CAN devices 126, 127, 128 can be achieved. The first queue 140, 192 and/or the respective associated queue credit 132, 156 may also take into account other aspects for determining the importance to access to the CAN bus 104. An example of such an aspect may be, for example, the importance of a CAN frame 130 and/or the associated payload. Corresponding explanations can be found further down in this document.

Figure 2 schematically illustrates an example of a CAN frame 130. The CAN frame 130 may comprise a start-of-frame (SOF) bit 170, an arbitration field 172, a control field 176, a data field 178, a cycle redundancy check (CRC) field 180, an acknowledge (ACK) field 182, and an end-of-frame (EOF) field 184. In an example, each CAN frame 130 is configured according to the CAN protocol as mentioned in the introduction. Each field of the CAN frame 130 may comprise a plurality of bits.

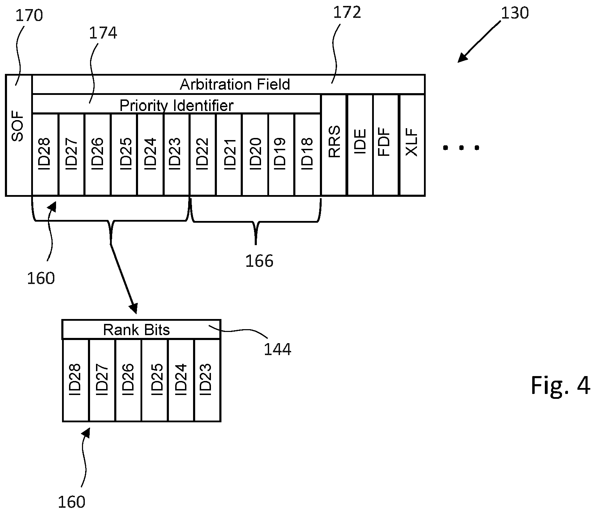

Figure 4 schematically illustrates a portion of the CAN frame 130 (from Figure 2). In an example, the arbitration field 172 comprises a priority identifier 174 and a plurality of other bits, in particular the bits: RRS, IDE, FDF, XLF. The priority identifier 174 may comprise a predefined number of bits 160. In an example, the priority identifier 174 comprises eleven bits 160, which may be referred to as bits ID28 through ID18. The bit ID28 may be the most significant bit of the priority identifier 174. The bit ID 18 may be the least significant bit of the priority identifier 174.

In an example, predefined bits 160 of CAN frame 130 may be referred to as rank bits 144 of CAN frame 130. In the example of Figure 4, six bits 160 of the priority identifier 174 form the rank bits 144 of the CAN frame 130. The rank bits 144 may be the first six bits 160 of the priority identifier 174, starting with the most significant bit ID28. As an effect, the rank bits 144 may in an example be formed by the bits ID28 to ID23 of the priority identifier 174 of the CAN frame 130.

In principle, the rank bits 144 of a CAN frame 130 can be defined by any bits 160 of the respective CAN frame 130. In particular, the rank bits 144 of the CAN frame 130 may be defined by any bits 160 of the priority identifier 174. The rank bits 144 may be consecutive bits 160 of the priority identifier 174 or arbitrarily selected bits 160 of the priority identifier 174. In an example, it is not required that the rank bits 144 be selected and defined as consecutive bits 160 of the priority identifier. In another example, the rank bits 144 may have a leading position, in particular within the priority identifier 174.

In an example, the rank bits 144 of each CAN frame 130 are predefined by two to six bits 160 of the most significant bits of the respective CAN frame 130. In another example, the rank bits 144 of each CAN frame 130 may be predefined by two to six bits 160 of the most significant bits of the priority identifier 174 or arbitration field 172 of the respective CAN frame 130. For example, the rank bits 144 of a CAN frame 130 may be predefined by the first two, the first three, the first four, the first five or the first six bits 160 of the priority identifier 174 of the CAN frame 130. As an effect, the rank bits 144 may be composed by a selection of most significant bits of the priority identifier 174 of the CAN frame 130. In an example, the number of rank bits 144 of a CAN frame 130 may be predefined and/or limited such that the number of rank bits 144 is an integer and is at most 40% of the number of bits of the priority identifier 174 of the CAN frame.

The rank bits 144 of multiple CAN frames 130 may represent different bit value combinations. Figure 3 schematically illustrates a first queue 140. The first queue 140 comprises a number of three first CAN frames 134, 136, 138. The rank bits 144 of the first CAN frame 134 may represent a first bit value combination, for example 0-0-0. The rank bits 144 of the first CAN frame 136 may represent a second bit value combination, for example 0-0-1. The rank bits 144 of the first CAN frame 138 may represent a third bit value combination, for example 0-1-0.

The rank bits 144 of a CAN frame 130 provide the possibility and advantage to assign and/or represent an importance of the CAN frame 130. In an example, the rank bits 144 of a CAN frame 130 may be independent of the CAN device 128. As an effect, the bits 160 of the priority identifier 174 of the CAN frame 130 may be divided into the rank bits 144 of the priority identifier 174 and the remaining bits 166, which are referred to as device bits 166. As an effect, the bits 160 of the priority identifier 174 of the CAN frame 130 comprise the rank bits 144 and the device bits 166. In an example, the rank bits 144 may be the most significant bits of the priority identifier 174 of the CAN frame 130 and the device bits 166 may be the least significant bits of the priority identifier 174 of the CAN frame 130. The rank bits 144 of the priority identifier 174 of the CAN frame 130 may represent the importance of the CAN frame 130, in particular the importance of the payload data of the CAN frame 130, wherein the device bits 166 of the priority identifier 174 of the CAN frame 130 represent an importance of the CAN frame 130 as such. The rank bits 144 and the device bits 166 of the same priority identifier 174 of the CAN frame 130 may be defined independently of each other..

The rank bits 144 provide the possibility and advantage for a plurality of CAN frames 130 comprising similar rank bits 144 to be assigned to the same queue. As an effect, the queue may comprise a plurality of CAN frames 130 whose CAN frame importance is similar. A range, referred to as a rank range, may therefore be predefined for the queue. Via the rank range, the CAN device 128 can decide whether or not to assign a new CAN frame 130 to a queue.

In an example, a predefined first rank range is allocated to the first queue 140. An example of the first queue 140 is schematically shown in Figure 3. The first rank range may be, for example, the range of bit combinations from 0-0-0 to 0-1-1. The rank bits 144 of each first CAN frame 134, 136, 138 may be covered by the first rank range. The CAN device 128 may be configured such that each first CAN frame 134, 136, 138 is comprised by the first queue 140 if the rank bits 144 of the respective first CAN frame(s) 134, 136, 138 are covered by the first rank range. The CAN device 128 may further be configured such that a CAN frame 130 is not comprised by the first queue 140 if the rank bits 144 of the respective CAN frame 130 are not covered by the first rank range. The first rank range offers the advantage that new CAN frames 130 can either be assigned to the first queue 140 via the CAN device 128, or not assigned to the first queue 140. As an effect, a plurality of first CAN frames 134, 136, 138 may be comprised by the first queue 140, wherein the importance of the first CAN frames 134, 136, 138 comprised by the first queue 140 may be similar.

In an example, the rank range of a queue, in particular the first rank range of the first queue 140, is not limited to a single bit combination. The rank range of a queue, and in particular the first rank range of the first queue 140, may comprise a plurality of bit combinations. If the rank bits 144 of a CAN frame 130 match one of the plurality of bit combinations of a queue, then the corresponding CAN frame 130 may be assigned to the respective queue. As an effect, the rank range of a queue may define allowable bit combinations for the rank bits 144 of a CAN frame 130 that are or may be comprised by the queue. As an advantage, the rank range of a queue may be used to order the importance of CAN frames 130 comprised by the queue. As a further effect, the queue may be assigned an importance that represents an importance of the CAN frames 130 comprised by the queue.

In an example, the CAN device 128 is configured to comprise and/or use a second queue 148. The CAN device 128 may be configured to form the second queue 148. To form a second queue 148, the CAN device 128 may be configured to create a new queue, implement a queue and/or activate a template queue as second queue 148. The second queue 148 may comprise at least one second CAN frame 150. Figure 3 schematically illustrates an example of the second queue 148, wherein the second queue 148 comprises a number of three second CAN frames 150, 152, 154. A second queue credit 156 may be associated with the second queue 148.

The CAN device 128 may further be configured, in response if the second queue credit 156 is greater than a predefined second reference value, to start transmitting at least one second CAN frame 150, 152, 154 of the second queue 148. Further, the CAN device 128 may be configured, in response, if the second queue credit 156 is less than the predefined second reference value, to prevent transmission of the at least one second CAN frame 150, 152, 154. The CAN device 128 may be configured to adjust the second reference value. For example, a hysteresis can be created by the adjustment.

For the second queue 148, the second queue credit 156, and the second reference value, reference is made to the preceding explanations, preferred features, technical effects, and advantages in an analogous manner as previously explained for the first queue 140, the first queue credit 132, and the first reference value.

If the second queue credit 156 of the second queue 148 is greater than the second reference value, the CAN device 128 may begin arbitration to transmit the second CAN frame 150. The CAN device 128 may be configured accordingly. If the CAN device 128 wins the arbitration, the CAN device 128 may transmit the complete second CAN frame 150. If the CAN device 128 loses the arbitration, the CAN device 128 will not continue transmitting the second CAN frame 150.

As explained in the previous example, the CAN device 128 may be configured, in response if the second queue credit 156 is or becomes greater than the predefined second reference value, to start sending exactly one second CAN frame 150. According to the arbitration, the CAN device 128 may completely transmit the respective second CAN frame 150 or stop transmitting the second CAN frame 150, once the arbitration is lost. The CAN device 128 can check subsequently whether the second queue credit 156 is greater than the second reference value. Furthermore, the CAN device 128 may be configured to decide, according to the result of the check, i.e. whether the second queue credit 156 is greater or less than the predefined second reference value, whether the CAN device 128 starts transmitting a (further) second CAN frame 150/152 or whether the CAN device 128 prevents the transmission of a (further) second CAN frame 150/152.

The second queue 148 and the associated second queue credit 156 provide the possibility and an associated advantage that, for example, the waiting time (see above) and/or the importance of a second CAN frame 150, 152, 154, in particular the associated payload, contributes to the importance with which the CAN device 128 obtains access to the CAN bus 104 for sending second CAN frames 150, 152, 154.

For example, if a CAN device 128 has successively transmitted a plurality of first CAN frames 134, 136, 138 over the CAN bus 104, this uninterrupted bus access may result in a reduction of the first queue credit 132 of the first queue 140 of the CAN device 128. At the same time, waiting for the CAN device 128 to access the CAN bus 104 to send a second CAN frame 150, 152, 154 may cause the second queue credit 156 of the second queue 148 of the CAN device 128 to increase. In an example, the situation may occur where the first queue credit 132 of the first queue 140 of the CAN device 128 is less than the first reference value, while at the same time the second queue credit 156 of the second queue 148 of the CAN device 128 is greater than the second reference value. As a result, a change in authorization to access the CAN bus 104 may occur, such that in this example, the CAN device 128 then prevents further transmission of a first CAN frame 134, 136, 138 and begins transmission of a second CAN frame 150 of the second queue 148 of the CAN device 128, in particular by performing arbitration.

Based on the previous example, it was explained that via the first and second queues 140, 148 and the respective associated queue credits 132, 156, it is possible to take into account a waiting time for determining the importance on the authorization to access the CAN bus 104 for sending the first or second CAN frames 134-138, 150-154. The first and second queues 140, 148 and/or the respective associated queue credits 132, 156 may also take into account other aspects for determining the importance on the authorization for the CAN bus access to send the respective associated CAN frames 134-138, 150-154. An example of such an aspect may be, for example, the importance of a CAN frame 134-138, 150-154 and/or the associated payload. In an example, via the first and second queues 140, 148 and the respective associated queue credits 132, 156, it may be possible to consider the importance of the respective associated CAN frames 134-138, 150-154 and/or the associated payload data to determine the importance on the authorization on CAN bus access to send the respective CAN frames 134-138, 150-154.

In an example, the CAN device 128 is configured to reduce the associated queue credit 132, 156 in response to a CAN frame 130, 134-138, 150-152 being sent from a queue 140, 148. The CAN device 128 may be configured, for example, to reduce the queue credit 132 associated with the first queue 140 in response to a transmission of a first CAN frame 134-138 from the first queue 140 of the CAN device 128. The sending of a CAN frame 130, 134-138, 150-152 may in particular be understood as a complete sending of the respective CAN frame 130, 134-138, 150-152. In an example, the reduction of the queue credit 132, 156 may be performed abruptly or continuously with each sending of a CAN frame 130, 134-138, 150-152, in particular over time while sending the respective CAN frame 130, 134-138, 150-152.

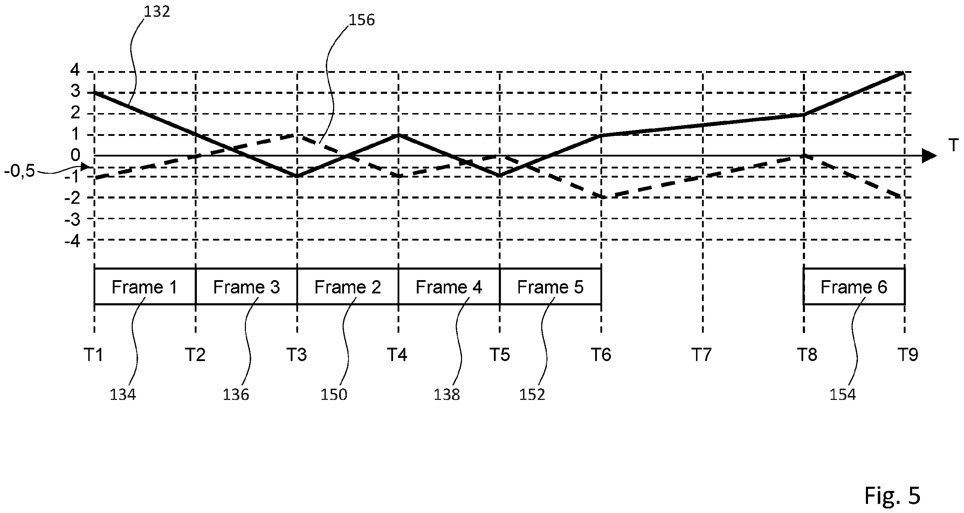

Figure 5 schematically illustrates an example of a waveform of the first queue credit 132 plotted over time T. In an example, the first queue credit 132 at time T1 is 3. Between times T1 and T2, transmission of the first CAN frame 134 from the first queue 140 is performed. By transmitting the first CAN frame 134 of the first queue 140, the first queue credit 132 may decrease to a value of 1. In Figure 5, the reduction of the first queue credit 132 is shown as a continuous reduction of the first queue credit 132 over the period between times T1 and T2. In principle, a continuous reduction of the first queue credit 132 is possible. Alternatively, the reduction of the first queue credit 132 may be performed abruptly, for example at the end of the complete transmission of the first CAN frame 134 (not shown in Figure 5), so that the first queue credit 132 jumps from the value 3 to the value 1 at time T2.

In an example, the CAN device 128 is configured to reduce the associated queue credit 132, 156 by a predefined value, referred to as a reduction value, in response to a CAN frame 130, 134-138, 150-152 being sent from a queue 140, 148. In the previous example, the first queue credit 132 reduced by the reduction value of size 2 due to the transmission of the first CAN frame 134. In an example, each queue 140, 148 may have a respective associated reduction value defined. The more important a queue 140, 148 is, the smaller the reduction value may be defined for the respective queue 140, 148. The first queue 140 may be assigned a first reduction value, such as of size 2, for example. A second reduction value, such as of size 3, may be assigned to the second queue 148. In an example, the first reduction value is smaller than the second reduction value. Alternatively, it is also possible for the second queue 148 to be assigned a second reduction value whose size corresponds to the first reduction value. In this case, the second reduction value may have, for example, the size 2.

In an example, the first queue 140, as schematically illustrated in Figure 3, may comprise a plurality of first CAN frames 134, 136, 138, each of whose rank bits 144 may be comprised by the first rank range. As an effect, the first queue 140 comprises a plurality of first CAN frames 134, 136, 138 whose importance may be at least similar. The first rank range may also characterize the importance of the first queue 140. In an example, the second queue 148 may comprise a plurality of second CAN frames 150, 152, 154, each of whose rank bits may be comprised by the second rank range. As an effect, the second queue 148 comprises a plurality of second CAN frames 150, 152, 154 whose importance is at least similar. The second ranking range may also characterize the importance of the second queue 148. The importance of the second queue 148 may be less than the importance of the first queue. Against this background, there may be an interest in prioritizing a sending of the first CAN frames 134, 136, 138 of the first queue 140 over a sending of the second CAN frames 150, 152, 154 of the second queue 148. At the same time, there may be an interest in ensuring that less important CAN frames, such as the second CAN frames 150, 152, 154, do not remain in the second queue 148 for too long. In order to achieve a balance between the different interests, the queue credit 132, 156 of a queue 140, 148 may be reduced with the sending of a CAN frame 134-138, 150-154 from the respective queue 140, as previously explained. If the queue credit 132 of one queue 140 is reduced, this simultaneously increases the chance for the other queue 148 to dispatch a CAN frame 150-154 at the next opportunity. It is noted that arbitration is still required for actual bus access to complete transmission of a CAN frame 130, 134-138, 150-154. The use of queues 140, 148 and associated queue credits 132, 156 may help balance the ability to access the CAN bus 104. In this way, all CAN frames 130, 134-138,150-154 are given a fair chance to be sent over a CAN bus 104 in a reasonable amount of time.

In an example, the CAN device 128 is configured to increase the queue credit of the at least one other queue 148, 140 of the CAN device 128 in response to a CAN frame 130, 134-138, 150-154 being sent from one of the plurality of queues 140, 148 of the CAN device 128. The increase may be performed by a predefined value referred to as an increase value. Each queue 140, 148 may have an increase value associated with it. The more important a queue 140, 148 is, the greater the increase value can be defined for the respective queue 140, 148. A first increase value, like a value of 2, may be assigned to the first queue 140. A second increase value, like a value of 1, may be assigned to the second queue 148. Therefore, the second increase value may be smaller than the first increase value.

For example, the CAN device 128 may be configured, in response to a transmission of a first CAN frame 134-138 from the first queue 140 of the CAN device 128, to then increase the second queue credit 156 associated with the second queue 148 by the second increase value. The increasing of the (second) queue credit 156 may, in an example, be performed abruptly or continuously with each transmission of a CAN frame 134-138 of another (first) queue 140.

In an example, the CAN device 128 is configured to assign a CAN frame 130 to exactly one of a plurality of queues 140, 148 of the CAN device 128. As an effect, the respective CAN frame 130 is comprised by the respective queue 140, 148. The CAN device 128 may comprise a module 141 that is configured to perform the assignment of a CAN frame 130 to exactly one of the plurality of queues 140, 148. Figure 3 schematically illustrates an example of the module 141 of the CAN device 128. In an example, the module 141 may be configured to assign a CAN frame 130 to either the first queue 140 as a first CAN frame 134, 136, 138 or to the second queue 148 as a second CAN frame 150, 152, 154. The CAN device 128 and/or the module 141 may be configured to assign a CAN frame 130 to exactly one of a plurality of queues 140, 148 of the CAN device 128 according to predefined bits of the CAN frame 130 and/or according to at least one field of the CAN frame 130. In an example, the CAN device 128 and/or the CAN module 141 may be configured to assign a CAN frame 130 according to the payload data of the CAN frame 130 either as a first CAN frame 134, 136, 138 to the first queue 140 or as a second CAN frame 150, 152, 154 to the second queue 148. It has already been explained in the previous paragraph that the first increase value for the first queue 140 may be greater than the second increase value for the second queue 148. As an effect, the first credit value for the first queue 140 due to a wait time may grow comparatively faster than the second credit value for the second queue 148 due to an equivalent wait time. As another effect in connection with the example, the first CAN frames 134, 136, 138 in the first queue 140 may gain a higher importance quicker due to a wait time than the second CAN frames 150, 152, 154 in the second queue 148 due to an equivalent wait time. The assignment of a CAN frame 130 to exactly one of the plurality of queues 140, 148 of the CAN device 128 may therefore also have an influence on how fast and/or with what importance the CAN device 128 gains access to the CAN bus 104 for sending a CAN frame 130, 134-138, 150-154. If the module 141 and/or the CAN device 128 assigns a CAN frame 130 to the first queue 140, for example, so that the CAN frame 130 is comprised as a first CAN frame 134-138 of the first queue 140, then - provided (as an example) that the first queue 140 is assigned a higher (first) increase value than the second queue 148 - the CAN frame 130, 134-138 has a high chance of being sent earlier (with higher importance). If said CAN frame 130 may not be assigned to the first queue 140 by the module 141 and/or the CAN device 128, for example due to a low importance of the associated payload data, but is assigned to the second queue 148, then there is a high probability that the corresponding CAN frame 130, 150-154 will be sent later (with lower importance).

Figure 5 schematically illustrates an example of a waveform of the second queue credit 156, plotted over time T. In an example, the second queue credit 156 is -1 at time T1. Between times T1 and T2, a transmission of the first CAN frame 134 from the first queue 140 is performed. By sending the first CAN frame 134 from the first queue 140, the second queue credit 156 may increase by the second increase value to the value 0. In this case, the second increase value has a value of 1.

In an example, the first reference value and the second reference value may each have a value of -0.5. As an effect, if the first queue credit 132 is greater than the first reference value, the CAN device 128 may begin transmitting a first CAN frame 134-138. As another effect, if the second queue credit 156 is greater than the second reference value, the CAN device 128 may begin transmitting a second CAN frame 150-154. Further, if the situation arises where both the first queue credit 132 is greater than the first reference value and the second queue credit 156 is greater than the second reference value, the CAN device 128 may be configured to prioritize sending a first CAN frame 134-138 of the first queue 140 over sending a second CAN frame 150-154 of the second queue 148. As an effect, no simultaneous transmission of two CAN frames 130, 134-138, 150-154 by the same CAN device 128 is performed. If in the previous example the first CAN frame 134-138 of the first queue 140 is transmitted, the CAN device 128 will again check thereafter whether and if so from which queue 140, 148 a CAN frame 130, 134-138, 150-154 can be transmitted.

In an example shown in Figure 5, the first queue credit 132 comprises the value 1 at time T2 and the second queue credit 156 comprises the value 0 at time T2. The CAN device 128 can therefore start sending another first CAN frame 136 at time T2. Transmission of the further first CAN frame 136 may be performed between T2 and T3. As a result, the second queue credit 156 increases by the second increase value to a value of 1 at time T3. At the same time, the first queue credit 132 may decrease by the first reduction value to the value -1 at time T3. At time T3, the first queue credit 132 is less than the first reference value, so that further transmission of a first CAN frame 138 is prevented. In an example, the first reference value may be represented by the dashed line at value "-0,5" in Figure 5. At time T3, the second queue credit 156 is greater than the second reference value so that the CAN device 128 can start sending a second CAN frame 150 at time T3. In an example, the second reference value may also be represented by the dashed line at value "-0,5" in Figure 5. The sending of the second CAN frame 150 may be performed between time T3 and T4. As an effect and advantage, although the second CAN frame 150 may have a low importance, by waiting during the period between T1 and T3, the second CAN frame 150 is given the opportunity to be transmitted over the CAN bus 104. By waiting, low priority CAN frames 150-154 can achieve an increase in the queue credit 156 of the associated queue 148, preventing CAN frames 150-154 from remaining in a low priority queue 148 for too long. As a further effect, all CAN frames 130, 134-138, 150-154 can be given a fair chance of being sent via the CAN bus 104 within a reasonable amount of time. Settings can be made via the at least one reduction value and/or via the at least one increase value in order, for example, to be able to send particularly important CAN frames 134-138 with a very short waiting time and in order, for example, to be able to send other CAN frames 150-154 with a possibly longer waiting time via the CAN bus 104. The queues 140, 148 and associated queue credits 132, 156 can effectively prevent, in an example, a CAN frame 130, 134-138, 150-154 from possibly never being sent over the CAN bus 104 or only being sent with an unacceptable wait time. Rather, waiting is rewarded.

In an example, the CAN device 128 is configured to detect an idle time during which neither a CAN frame 130 is transmitted by the CAN device 128 nor a CAN frame 130 is received by the CAN device 128. The idle time may occur, for example, if none of the CAN devices 128 of a CAN system 100 transmits a CAN frame 130. The CAN device 128 may further be configured to increase each queue credit 132, 156 of the CAN device 128 according to the idle time. As an effect, each queue credit 132, 156 may increase the longer the idle time is. In an example, the CAN device 128 may be configured to increase each queue credit 132, 156 of the CAN device 128 by a predefined value, also referred to as an idle time value, per predefined amount of time during the idle time. In the example of Figure 5, an idle time may begin at time T6 and continue until time T8. During the idle time T6 to T8, the second queue credit 156 can increase from the value -2 to the value 0. The first queue credit 156 may increase from the value 1 to the value 2 during the idle time T6 to T8. The idle value for the first queue 132 may also be referred to as the first idle value. The idle value for the second queue 156 may also be referred to as the second idle value. In an example, the first idle value may be less than the second idle value.

In the example of Figure 5, it may be assumed at time T6 that there is no (further) first frame 134-138 in the first queue 140. At time T6, it may also be assumed that the second queue credit 156 may be less than the second reference value, such that the CAN device 128 does not transmit the second CAN frame 154. It is further assumed that the CAN device 128 does not receive any CAN frames 130. As an effect, the idle time may start at T6. Over the idle time between T6 and T8, both queue credits 132, 156 increase. At time T8, queue credit 156 reaches 0, which can be greater than the second reference value, which may be -0.5 (minus 0.5). As an effect, the CAN device 128 will start sending the second CAN frame 154 from the second queue 148. Allowing for the idle time to increase the queue credits 132, 156 provides the advantage that the CAN device 128 may transmit all CAN frames 130, 134-138, 150-154, even if the transmission may involve some waiting time.

In an example, the CAN device 128 may be configured to set and/or limit each queue credit 132, 156 to a predefined value, also referred to as an idle limit, in response if the idle time is greater than a predefined idle time threshold. As an effect, a queue credit 132, 156 is prevented from assuming a great value during a long idle time, which in an unfavorable case cannot be cleared by sending CAN frames 130, 134-138, 150-154 or can only be cleared with difficulty. A limitation to the idle value contributes to a balancing of the importance among the queues 140, 148. In an example, each queue 140, 148 may be assigned an associated idle limit. For the first queue 140, the idle limit may be referred to as the first idle limit. For the second queue, the idle limit may be referred to as the second idle limit. In an example, the first idle limit may correspond to the first reference value. Further, the second idle limit may correspond to the second reference value. As an effect, all queues have a similar start condition after a long idle time.

In an example, the first and/or second reference value are each zero. The first and/or second reference value can also be a non-zero value, such as +0.5 or -0.5.

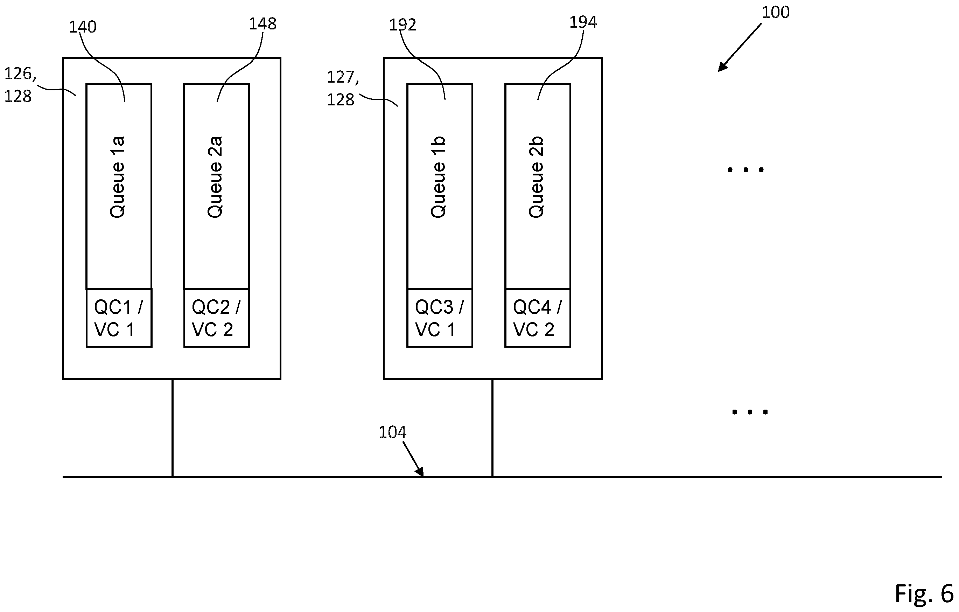

Figure 6 schematically illustrates another example of a CAN system 100. The CAN system 100 comprises a first CAN device 126, a second CAN device 127, and a CAN bus 104. In an example, the first CAN device 126 and the second CAN device 127 may each be configured according to the CAN device 128. For the first and second CAN devices 126, 127, in an example, reference is made to the preceding explanations, preferred features, technical effects and/or advantages in an analogous manner as they have been explained for the CAN device 128. In principle, the CAN system 100 may comprise further CAN devices 126-128. Each CAN device 126-128 of the CAN system 100 is coupled to the CAN bus 104 so that each CAN device 126-128 can transmit and/or receive CAN frames 130 via the CAN bus 104.

In an example, the first CAN device 126 may comprise a first queue 140 and a second queue 148. The first and second queues 140, 148 may be implemented by the first CAN device 126. Further, the second CAN device 127 may comprise a first queue 192 and a second queue 194. The first and second queues 192, 194 may be implemented by the second CAN device 127. It is noted that the first CAN device 126 and the second CAN device 127 are distinct and/or physically separate CAN devices 126, 127. As a result, the first queue 140 of the first CAN device 126 and the first queue of the second CAN device 127 are also different and/or separate queues 140, 192. As a further result, the second queue 148 of the first CAN device 126 and the second queue 194 of the second CAN device 127 are also different and/or separate queues 148, 194.

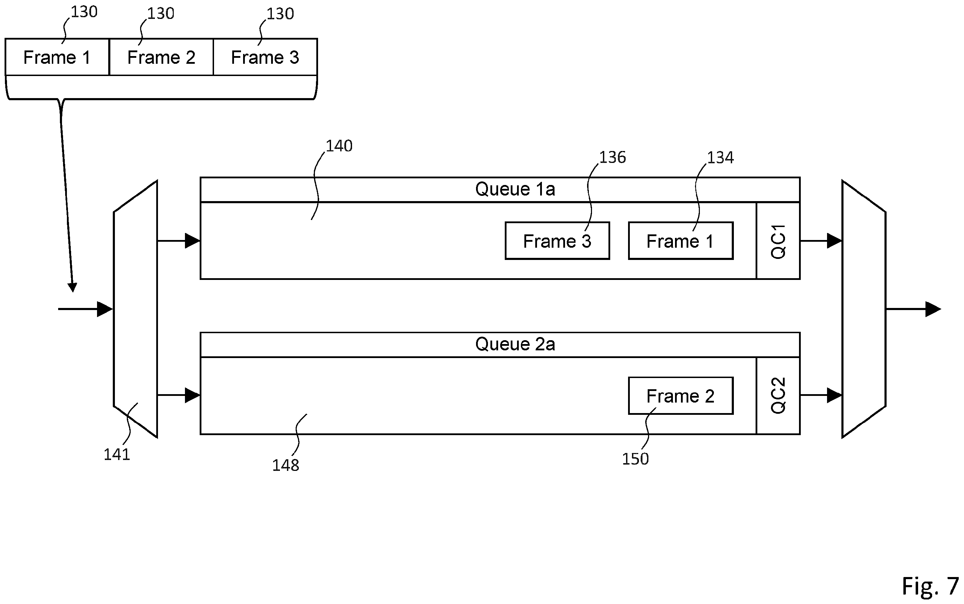

Figure 7 schematically illustrates an example of the first and second queues 140, 148 of the first CAN device 126. In an example, the first queue 140 of the first CAN device 126 comprises first CAN frames 134 and 136. The two first CAN frames 134, 136 may each comprise rank bits 144 covered by a first predefined rank range. This first rank range may be a first rank range of the first CAN device 126. In an example, the second queue 148 of the first CAN device 126 comprises a second CAN frame 150. The second CAN frame 150 may comprise rank bits covered by a second predefined rank range. This second rank range may be a second rank range of the first CAN device 126.

Figure 8 schematically illustrates an example of the first and second queues 192, 194 of the second CAN device 127. In an example, the first queue 192 of the second CAN device 127 comprises a first CAN frame 196. The first CAN frame 196 may comprise rank bits covered by a first predefined rank range. This first rank range may be a first rank range of the second CAN device 127. In an example, the second queue 194 of the second CAN device 127 comprises second CAN frames 198 and 200. The two second CAN frames 198, 200 may each comprise rank bits 144 covered by a second predefined rank range. This second rank range may be a second rank range of the second CAN device 127.

Although each CAN device 126, 127 implements the respective associated first queue 140, 192 in the examples explained above, it may be of interest that the first queue 140 of the first CAN device 126 and the first queue 192 of the second CAN device 127 are considered virtually and/or logically together. For example, if the first CAN device 126 sends a CAN frame 134 from the first queue 140 of the first CAN device 126 over the CAN bus 104, then it may be of interest that the second CAN device 127 recognizes that the first CAN frame 134 sent by the first CAN device 126 is virtually or logically associated with the first queue 196 of the second CAN device 127, and therefore reduces the first queue credit of the first queue 192 of the second CAN device 127 in the same way that sending the first CAN frame 134 reduces the first queue credit of the first queue 140 of the first CAN device 126. In this manner, the first queue 140 (as well as the associated first queue credit) of the first CAN device 126 and the first queue 192 (as well as the associated first queue credit) of the second CAN device 127 may be virtually and/or logically coupled. The preceding explanations, preferred features, technical effects and/or advantages as explained in connection with the first queues 140, 192 (as well as the associated first queue credits) may apply in an analogous manner for the second queues 148, 194 of the two CAN devices 126, 127. As an effect and/or advantage, each CAN frame 134, 136, 196, 150, 198, 200 may be given a fair chance to be transmitted over the CAN bus 104 in a reasonable amount of time regardless of the respective CAN device 126, 127.

In the following, reference is first made to the first CAN device 126, wherein the associated explanations, preferred features, technical effects and advantages may apply in an analogous manner to the second CAN device 127.

In an example, the first CAN device 126 is configured to receive a CAN frame 196 referred to as a third CAN frame 202. The third CAN frame 202 may be formed by the first CAN frame 196 from a first queue 192 of the second CAN device 127, which is transmitted from the second CAN device 127 to the first CAN device 126 via the CAN bus 104. In an example, the second rank range of the second CAN device 127 and the first rank range of the first CAN device 126 are the same or correspond to each other. The first CAN device 126 may be configured to detect, based on the rank bits of the third CAN frame 202, whether the third CAN frame 202 belongs to a first logical and/or virtual queue to which the first queue 140 of the first CAN device 126 and the first queue 192 of the second CAN device 127 may be associated. The third CAN frame 202 may belong to the first logical and/or virtual queue if the rank bits of the third CAN frame 202 are covered by the first rank range of the first CAN device 126. If the rank bits of the third CAN frame 202 are covered by the first rank range of the first CAN device 126, the first CAN device 126 may treat the received third CAN frame 202 as or equal to a transmitted first CAN frame 134, 136 of the first queue 140 of the first CAN device 126. This analogous treatment may implement the principle of shared, logical and/or virtual queuing in each CAN device 126, 127.

In an example, the first CAN device 126 is configured to, in response if the rank bits of the third CAN frame 202 are in the first rank range of the first CAN device 126, to reduce the first queue credit 132 of the first queue 140 of the first CAN device 126. The first CAN device 126 may be configured to reduce the first queue credit 132 by receiving the third CAN frame 202 in the same manner as if the first CAN device 126 had transmitted a first CAN frame 134 of the first queue 140 of the first CAN device 126. Thus, receiving the third CAN frame 202 may result in the same reduction as sending a first CAN frame 134 of the first queue 140 of the first CAN device 126. As an effect, the first CAN device 126 may implement the basic principle of a first logical/virtual queue representing the first queue 140 of the first CAN device 126 and the first queue 192 of the second CAN device 192.

In an example, the CAN device 126 is configured, in response to a transmission of a first CAN frame 134, 136 from the first queue 140, to reduce the associated queue credit 132 by the value referred to as the first reduction value. Further, the CAN device 126 may be configured to reduce the queue credit 132 of the first queue 140 by a value referred to as a third reduction value in response to receiving a third CAN frame 202. The first reduction value and the third reduction value may be the same and/or predefined. In an example, the first reduction value may be less than the third reduction value. As a result of this ratio, the first CAN device 126 still reserves a higher importance for its own first CAN frames 134, 136 relative to a received third CAN frame 202.

Previously, reference was made to the receipt of a third CAN frame 202, which may be treated similarly to the sending of a first CAN frame 134, 136 by the first CAN device 126. The first CAN device 126 comprises the first queue 140 and may also comprise the second queue 148. The second queue 148 is associated with the second queue credit 156.

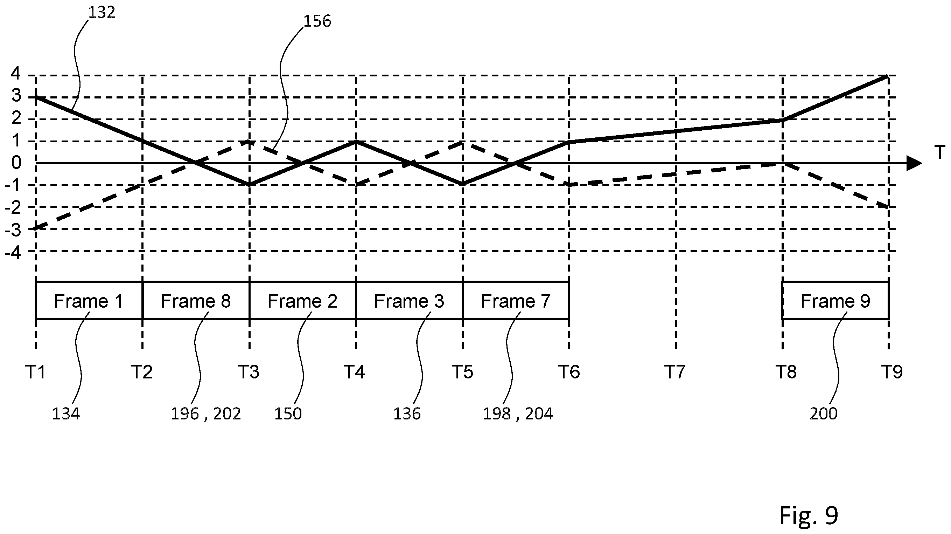

Figure 9 schematically illustrates an example of a waveform of the first queue credit 132, plotted over time T. In the example, the first queue credit 132 at time T1 is 3. Between times T1 and T2, in this example, the sending of the first CAN frame 134 from the first queue 140 of the first device 126 is performed. By sending the first CAN frame 134 of the first queue credit 132, the first queue credit 132 may decrease to the value 1. At the same time, the second queue credit 156 of the second queue 146 of the first CAN device 126 may increase from a value of -3 (at time T1) to a value of -1 (at time T2). Between the time T2 and T3, the first CAN device 126 may receive the third CAN frame 202. The first CAN device 126 may detect that the rank bits of the third CAN frame 202 are in the first rank range of the first CAN device 126, such that the first CAN device 126 reduces the first queue credit 132 based on the third CAN frame 202. In an example shown in Figure 9, the first CAN device 126 reduces the first queue credit 132 from a value of 1 (at time T2) to a value of -1 (at time T3) based on the third CAN frame 202. The first CAN device 126 may be configured to increase the second queue credit 156 of the second queue 146 of the first CAN device 126 from the value - 3 (at time T1) to the value -1 (at time T2) based on the receipt of the third CAN frame 202. The receipt of the third CAN frame 202 and the transmission of the first CAN frame 134 may each cause analogous reductions in the first queue credit 132 and/or increases in the second queue credit 156. As an effect, the first CAN device 126 may implement the principle of a shared, logical and/or virtual first queue.

In an example, the first CAN device 126 is configured to receive a CAN frame 198 referred to as a fourth CAN frame 204. The fourth CAN frame 204 may be formed by the second CAN frame 198 from a second queue 194 of the second CAN device 127, which is transmitted from the second CAN device 127 to the first CAN device 126 via the CAN bus 104. In an example, the second rank range of the second CAN device 127 and the first rank range of the first CAN device 126 are the same or correspond to each other. The first CAN device 126 may be configured to detect, based on the rank bits of the fourth CAN frame 204, whether the fourth CAN frame 204 belonged to a second logical and/or virtual queue to which the second queue 148 of the first CAN device 126 and the second queue 194 of the second CAN device 127 may be associated. The fourth CAN frame 204 may belong to the second logical and/or virtual queue if the rank bits of the fourth CAN frame 204 fall within the second rank range of the first device 126. If the rank bits of the fourth CAN frame 204 fall within the second rank range of the first CAN device 126, the first CAN device 126 may treat the received fourth CAN frame 204 as a transmitted second CAN frame 150 of the second queue 148 of the first CAN device 126.

In an example, the first CAN device 126 is configured to, in response, if the rank bits of the fourth CAN frame 204 are in the second rank range of the first CAN device 126, reduce the second queue credit 156 of the second queue 148 of the first CAN device 126. In an example, the first queue area of the first CAN device 126 and the second queue area of the of the first CAN device 126 are different, in particular such that the first and second queue areas do not overlap. As an effect, it can be achieved that rank bits of a CAN frame cannot fall into both rank ranges, but only into one of the two rank ranges.

The first CAN device 126 may be configured to reduce the second queue credit 156 by receiving the fourth CAN frame 204 in the same manner as if the first CAN device 126 had transmitted a second CAN frame 150 of the second queue 148 of the first CAN device 126. Thus, receiving the fourth CAN frame 204 may result in the same reduction as sending a second CAN frame 150 of the second queue 148 of the first CAN device 126. As an effect, the first CAN device may implement the basic principle of a logical/virtual queue both in connection with the first queue 140, 192 and in connection with the second queue 148, 194. The second logical/virtual queue may represent the second queue 148 of the first CAN device 126 and the second queue 194 of the second CAN device 192.

In an example, the CAN device 126 may be configured to reduce the associated queue credit 156 by the value referred to as the second reduction value in response to a transmission of a second CAN frame 150 from the second queue 148. In addition, the CAN device 126 may be configured to reduce the queue credit 156 of the second queue 148 by a value referred to as a fourth reduction value in response to receiving a fourth CAN frame 204. The second reduction value and the fourth reduction value may be the same and/or predefined. In an example, the second reduction value may be less than the fourth reduction value. As a result of this ratio, the first CAN device 126 still maintains a higher importance for its own second CAN frames 150 relative to a received fourth CAN frame 204.

In an example, the second CAN device 127 and/or any other CAN device 128 is configured analogously to the first CAN device 126. For the second CAN device 127 and/or for each further CAN device 128, reference may be made to the preceding (and/or subsequent) explanations, preferred features, technical effects and advantages in an analogous manner as explained for the first CAN device 126.

In an example, the first CAN device 126 is configured to receive a plurality of third CAN frames 202. The first CAN device 126 may receive the plurality of third CAN frames 202 sequentially. The first CAN device 126 may be configured, in response, if the first received third CAN frame 202 comprises rank bits that are in the first rank range of the first CAN device 126, to set the first queue credit of the first queue 140 of the first CAN device 126 to a predefined value, also referred to as a first calibration value. The first calibration value may correspond to the first reference value, in particular minus the first reduction value. For example, if the second CAN device 127 transmits a plurality of third CAN frames 202 to the first CAN device 126 in succession via the CAN bus 104, it may be assumed that the first queue credit of the first queue 192 of the second CAN device 127 is greater than a predefined first reference value (for the second CAN device 127), so that the second CAN device 127 starts transmitting a first one of the plurality of third CAN frames 202. If the first CAN device 126 receives the first of the plurality of third CAN frames 202, the first CAN device 126 may assume that the first queue credit of the first queue 192 of the second CAN device 192 was greater than the first reference value of the second CAN device 127. Based on this rationale, the first CAN device 126 may set the first queue credit of its own first queue 140 to the first calibration value, which is preferably equal to the first reference value (of the first device 126), in particular minus the (first) reduction value. As an effect, upon receiving the first of a plurality of third CAN frames 202, the first queue credit of the first queue 140 of the first CAN device 126 will be equal to the first queue credit of the first queue 192 of the second CAN device 127. As a further effect, the two aforementioned queue credits may be synchronized. After the first CAN device 126 receives the first of a plurality of third CAN frames 202, the first CAN device 126 may receive the additional third CAN frames 202. The first CAN device 126 may be configured, in response, if (such) a further third CAN frame 202 is received with rank bits that are in the first rank range of the first CAN device 126, to reduce the first queue credit of the first queue 140 of the first CAN device 126. As an effect, after synchronizing the queue credits, the first CAN device 126 may then reduce the first queue credit of the first queue 140 by the (first) reduction value with each additional third CAN frame 202 received. As a further effect, the first queue credit of the first queue 140 of the first CAN device 126 may remain synchronized with the first queue credit of the first queue 192 of the second CAN device 127.

In an example, the first CAN device 126 is configured to receive a plurality of fourth CAN frames 204. The first CAN device 126 may receive the plurality of fourth CAN frames 204 sequentially. The first CAN device 126 may be configured, in response, if the first received fourth CAN frame 204 comprises rank bits that are in the second rank range of the first CAN device 126, to set the second queue credit of the second queue 148 of the first CAN device to a predefined value, also referred to as a second calibration value. The second calibration value may correspond to the second reference value, in particular minus the second reduction value. The first CAN device 126 may be configured, in response, if a further fourth CAN frame 204 is received with rank bits that are in the second rank range, to reduce the second queue credit in particular by the (second) reduction value. For the example in connection with the reception of a plurality of fourth CAN frames 204, reference is made to the advantageous explanations, preferred features, technical effects and advantages in an analogous manner as explained for the examples in connection with the reception of a plurality of third CAN frames 202.

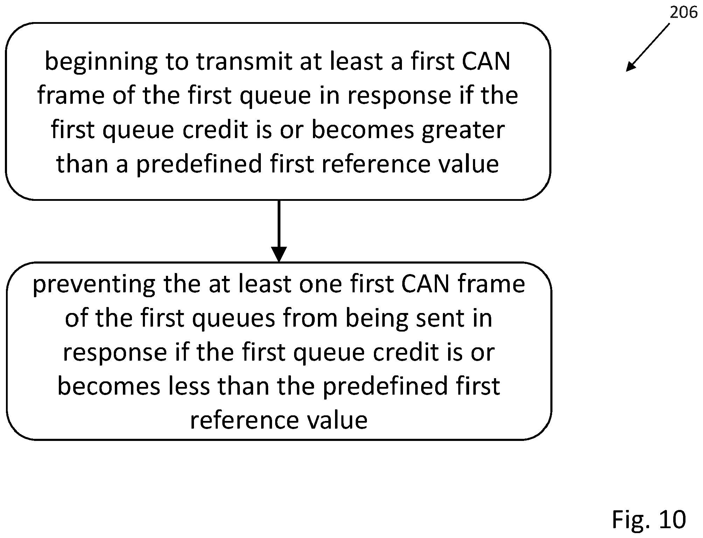

Figure 10 schematically illustrates an example of a flowchart of a method 206. In particular, the method 206 is for the CAN device 126, 127, 128. For the method 206, reference is made to the preceding explanations, preferred features, technical effects and or advantages in an analogous manner as explained in connection with Figures 1-9. The method 206 may comprise the following steps:
a) beginning to transmit at least a first CAN frame 134 of the first queue 140 in response if the first queue credit 132 is or becomes greater than a predefined first reference value, and
b) preventing the at least one first CAN frame 130 of the first queues 134 from being sent in response if the first queue credit 132 is or becomes less than the predefined first reference value.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A Controller Area Network, CAN, device (126, 127, 128),
wherein the CAN device is configured to transmit and receive CAN frames (130, 134, 136, 138, 150, 152, 154, 202, 204),
wherein the CAN device comprises a first queue (140) configured to including at least one first CAN frame (134, 136, 138),
wherein a first queue credit (132) is associated with the first queue,
wherein the CAN device is configured to, if the first queue credit is greater than a predefined first reference value, start to transmit at least one first CAN frame of the first queue, and
wherein the CAN device is configured to, if the first queue credit is less than the predefined first reference value, prevent transmission of the at least one first CAN frame of the first queues.

2. The CAN device according to the preceding claim, wherein predefined bits of each CAN frame are referred to as rank bits (144) of the respective CAN frame, wherein the rank bits of each first CAN frame are in a predefined first rank range.

3. The CAN device according to any of the preceding claims, wherein the CAN device comprises a second queue (148) configured to include at least one second CAN frame (150, 152, 154), wherein a second queue credit (156) is associated with the second queue, wherein the CAN device is configured to, if the second queue credit is greater than a predefined second reference value, start to transmit at least a second CAN frame of the second queue, and wherein the CAN device is configured to, if the second queue credit is less than the predefined second reference value, prevent transmission of the at least one second CAN frame of the second queue.

4. The CAN device according to the preceding claim, wherein the rank bits of each second CAN frame are in a predefined second rank range.

5. The CAN device according to claim 2 or 4, wherein rank bits of each CAN frame are defined by two to six bits of the most significant bits of the respective CAN frame.

6. The CAN device according to any of the preceding claims, wherein the CAN device is configured to, in response to a sending successfully of a CAN frame from a queue, reduce the associated queue credit.

7. The CAN device according to any of the preceding claims, if depending on claim 3, wherein the CAN device is configured to, in response to a sending successfully of a CAN frame from one queue, increase the queue credit of the other queue.

8. The CAN device according to any of the preceding claims, wherein the CAN device is configured to detect an idle time while neither a CAN frame is transmitted by the CAN device nor a CAN frame is received by the CAN device, and wherein the CAN device is configured to increase each queue credit depending on the idle time.

9. The CAN device according to the preceding claim, wherein the device is configured to, in response if the idle time is greater than a predefined threshold time, set and/or limit each queue credit to a predefined idle limit.

10. The CAN device according to any of the preceding claims, if depending on claim 2, wherein the CAN device is configured to receive a CAN frame referred to as the third CAN frame (202), and wherein the CAN device is configured, in response, if the rank bits of the third CAN frame are in the first rank range, to reduce the first queue credit.

11. The CAN device according to the preceding claim, if depending on claim 4, wherein the CAN device is configured to receive a CAN frame referred to as a fourth CAN frame (204), and wherein the device is configured, in response, if the rank bits of the fourth CAN frame are in the second rank range, to reduce the second queue credit.

12. The CAN device according to any of the preceding claims, if depending on claim 2, wherein the CAN device is configured to receive a plurality of third CAN frames, wherein the CAN device is configured, in response, if the first received third CAN frame comprises rank bits that are in the first rank range, to set the first queue credit to a predefined first calibration value, and wherein the device is configured to, if a further third CAN frame comprising rank bits that are in the first rank range is received, reduce the first queue credit.

13. The CAN device according to any of the preceding claims, if depending on claims 2 and 4, wherein the CAN device is configured to receive a fourth CAN frame followed by a third CAN frame, wherein the rank bits of the third CAN frame are in the first rank range, wherein the rank bits of the fourth CAN frame are in the second rank range, wherein the identifier of the third CAN frame represents a higher priority than the identifier of the fourth CAN frame, and wherein the device is configured to, if the first queue credit is less than a first threshold value, set the first queue credit to a predefined third reference value.

14. A controller area network, CAN, system (100) comprising: a plurality of CAN devices, each according to any of the preceding claims; and a CAN bus (104), wherein the CAN devices are coupled via the CAN bus.

15. A method (206) for a Controller Area Network, CAN, device (126, 127, 128) configured to transmit and receive CAN frames (130, 134, 136, 138, 150, 152, 154, 202, 204), and wherein the CAN device comprises a first queue (140) configured to include at least a first CAN frame (134, 136, 138), wherein the first queue is associated with a first queue credit (132), and wherein the method comprises the following steps:
beginning to transmit at least a first CAN frame of the first queue in response if the first queue credit is or becomes greater than a predefined first reference value, and
preventing the at least one first CAN frame of the first queues from being sent in response if the first queue credit is or becomes less than the predefined first reference value.
